# FASCICULE DE BREVET EUROPEEN

(11) **EP 4 133 975 B1**
(45) Date de publication et mention de la délivrance du brevet: **13.03.2024**
(21) Numéro de dépôt: 22182672.0
(22) Date de dépôt: 01.07.2022
(51) Int. Cl.: A47J 31/44

(54) **MACHINE DE DISTRIBUTION DE BOISSONS MUNIE D'UNE TETE DE DISTRIBUTION AMELIOREE**
MASCHINE ZUR GETRÄNKEAUSGABE MIT VERBESSERTEM AUSGABEKOPF
BEVARAGE DISPENSING MACHINE PROVIDED WITH AN IMPROVED DISTRIBUTION HEAD

(30) Priorité: 11.08.2021 FR 2108628
(43) Date de publication de la demande: 15.02.2023
(73) Titulaire: SEB S.A., 69130 Ecully (FR)
(72) Inventeur: DUTERTRE, Thierry, 69134 ECULLY CEDEX (FR)
(74) Mandataire: SEB Développement

(56) Documents cités:
- EP-A1- 2 740 391
- EP-A1- 3 395 212
- IT-A1- MI20 110 681
- US-A1- 2019 174 950

## Description

### Domaine technique

La présente invention concerne le domaine technique général des machines de distribution de boissons comportant une tête de distribution réglable en hauteur, notamment des machines à café automatiques.

### Etat de la technique

Il est connu du document EP3395212 une machine de distribution de boissons comportant un bâti, au moins une colonne de guidage agencée sur le bâti, un chariot monté coulissant sur l'au moins une colonne de guidage et une tête de distribution qui est montée sur le chariot pour être réglable en hauteur. Le chariot comporte un dispositif de maintien configuré pour maintenir en position le chariot et la tête de distribution entre une position haute d'attente et une position basse de distribution.

Dans une telle machine de distribution de boissons, notamment lorsqu'elle est une machine à café automatique, la tête de distribution comporte une buse de distribution de café et une buse de distribution de boissons lactées qui sont respectivement reliées à la machine par un tuyau souple.

Ces tuyaux souples permettent de déplacer la tête de distribution. Cependant, l'encombrement dans le bâti étant limité les tuyaux souples présentent une longueur limitée et dans les positions extrêmes de la tête de distribution, notamment la position haute d'attente, ils peuvent exercer un effort sur le chariot et la tête de distribution et ainsi faire se déplacer la tête de distribution vers le bas.

De plus, le vieillissement du dispositif de maintien peut amplifier le phénomène faisant que la tête de distribution placée en position haute d'attente par l'utilisateur peut descendre toute seule de plusieurs millimètres.

### Résumé de l'invention

La présente invention vise à remédier à ces inconvénients.

Le problème technique à la base de l'invention consiste à proposer une machine de distribution de boissons comportant une tête de distribution réglable en hauteur qui présente un fonctionnement sûr et ergonomique.

Un autre but de l'invention est de proposer une machine de distribution de boissons comportant une tête de distribution réglable en hauteur qui présente une conception simple et économique à mettre en oeuvre.

A cet effet, l'invention a pour objet une machine de distribution de boissons comportant un bâti, au moins une colonne de guidage agencée sur le bâti, un chariot monté coulissant sur l'au moins une colonne de guidage et une tête de distribution qui est montée sur le chariot pour être réglable en hauteur, le chariot comportant un dispositif de maintien configuré pour maintenir en position le chariot et la tête de distribution entre une position haute d'attente et une position basse de distribution, caractérisée en ce qu'elle comporte un dispositif complémentaire de maintien de la tête de distribution en position haute d'attente, le dispositif complémentaire comportant une pièce magnétique et un aimant d'immobilisation agencés de manière superposée, la pièce magnétique étant fixée sur le chariot et l'aimant d'immobilisation étant fixé sur le bâti ou réciproquement.

Ainsi, La position haute d'attente de la tête de distribution est stable et toujours la même. La tête de distribution ne peut quitter la position haute d'attente que sous l'action de l'utilisateur.

L'effort de maintien de la tête de distribution en position haute est assuré par un premier effort de maintien assuré par le dispositif de maintien et un deuxième effort de maintien assuré par le dispositif de maintien complémentaire. Ainsi, le dispositif de maintien peut être dimensionné pour obtenir un premier effort de maintien de la tête de distribution plutôt réduit sur la majorité de la course de la tête de distribution que l'utilisateur peut facilement vaincre pour déplacer la tête de distribution.

De manière avantageuse, l'aimant d'immobilisation est un aimant permanent.

Avantageusement, l'aimant d'immobilisation et la pièce métallique sont dimensionnés pour assurer un effort de maintien de la tête de distribution en position haute supérieur à 5 N.

De manière avantageuse, l'aimant d'immobilisation et la pièce métallique sont dimensionnés pour assurer un effort de maintien de la tête de distribution en position haute inférieur à 15 N.

De telles dispositions permettent de garantir un bon maintien de la tête de distribution en position haute d'attente.

De préférence, la tête de distribution est mobile sur une course supérieure à 50 millimètres.

Les conduits d'amenée de café, d'amenée de vapeur et d'amenée d'air sont souples mais présentent tout de même une certaine rigidité. De plus, les conduits d'amenée de café, d'amenée de vapeur et d'amenée d'air sont agencés dans des espaces exigus. L'agencement et la rigidité relative des conduits d'amenée de café, d'amenée de vapeur et d'amenée d'air tendent à tirer le chariot et la tête de distribution vers le bas avec un effort qui croit en fonction de la longueur de la course.

Avantageusement, le chariot comporte un bord supérieur, l'aimant d'immobilisation ou la pièce magnétique étant agencé sur le bord supérieur.

Un tel agencement permet d'obtenir une construction compacte, l'aimant d'immobilisation ou la pièce magnétique étant agencé dans l'alignement du chariot.

De préférence, le chariot est monté coulissant sur deux colonnes de guidage, l'aimant d'immobilisation ou la pièce magnétique étant agencé entre les deux colonnes.

De manière avantageuse, l'aimant d'immobilisation et la pièce magnétique comporte un axe vertical, la projection de l'axe vertical sur un plan vertical comportant les deux colonnes de guidage est positionnée de manière centrée entre les deux colonnes de guidage.

Ainsi, l'effort de maintien de la tête de distribution en position haute d'attente ou l'effort de libération de la tête de distribution de la position haute d'attente est équilibré par rapport aux deux colonnes de guidage.

Avantageusement, la tête de distribution comporte au moins une buse de distribution de boissons reliée à la machine par un conduit souple.

De préférence, la machine de distribution de boissons est une machine à café automatique, la tête de distribution comportant au moins une buse de distribution de café et au moins une buse de distribution de boissons lactées.

Ainsi la tête de distribution est bien maintenue en position haute d'attente, même si la tête de distribution comporte plusieurs conduits souples qui tendent à appliquer sur cette dernière un effort de traction vers le bas.

Avantageusement, le dispositif de maintien comporte au moins un élément de frottement et d'usure agencé sur le chariot et venant au contact de l'au moins une colonne de guidage sous l'action d'un organe de mise en pression.

Un tel dispositif de maintien permet d'obtenir un effort de maintien, donc un effort à fournir par l'utilisateur pour déplacer la tête de distribution, constant sur la course de la tête de distribution. Un tel dispositif de maintien permet également d'assurer une immobilisation automatique et un réglage aisé de la tête de distribution dans la position basse de distribution correspondant aux différentes positions d'utilisation en fonction des récipients choisis.

De préférence, l'au moins une colonne de guidage est métallique et l'organe de mise en pression comporte au moins un aimant qui coopère magnétiquement avec l'au moins colonne de guidage.

Avantageusement, l'organe de mise en pression comporte au moins un ressort.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig 1] La figure 1 est une vue en perspective d'une machine de distribution de boissons comportant un tête de distribution réglable en hauteur selon un mode particulier de réalisation de l'invention, la machine de distribution de boissons étant une machine à café automatique.
[Fig 2] La figure 2 est une vue en perspective partielle suivant le plan de coupe vertical suivant la ligne II-II de la machine de distribution de boissons illustrée sur la figure 1, la machine de distribution de boissons étant munie du dispositif de maintien et du dispositif de maintien complémentaire de la tête de distribution.
[Fig 3] La figure 3 est une vue de détail selon la direction III du dispositif de maintien et du dispositif de maintien complémentaire de la tête de distribution de la machine de distribution de boissons illustrée sur la figure 2.
[Fig 4] La figure 4 est une vue de côté selon la direction IV du dispositif de maintien et du dispositif de maintien complémentaire de la tête de distribution de la machine de distribution de boissons illustrée sur la figure 3.
[Fig 5] La figure 5 est une vue en coupe suivant la ligne brisée V-V du dispositif de maintien et du dispositif de maintien complémentaire de la tête de distribution de la machine de distribution de boissons illustrée sur la figure 4.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine de distribution de boissons, notamment la machine à café automatique font référence à cette machine reposant sur un plan de travail, en situation d'usage.

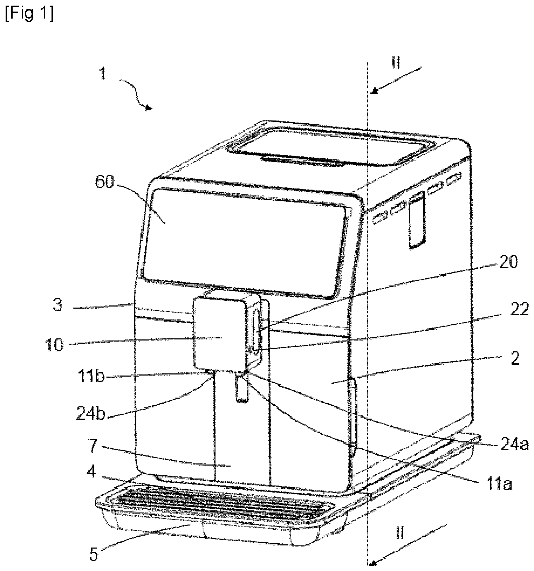

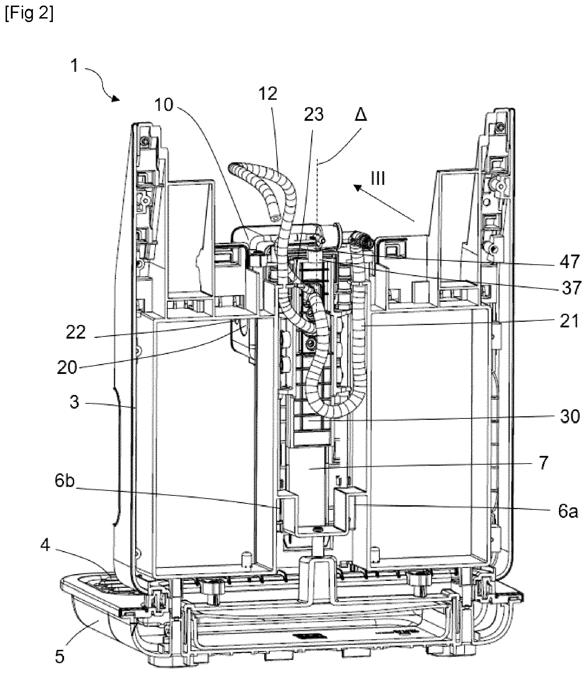

Tel que visible aux figures 1 et 2, une machine de distribution de boissons est une machine à café automatique 1 qui comporte un réservoir 2 formant une alimentation en eau froide, une pompe électrique, un système de chauffage pour générer de l'eau chaude/vapeur et un dispositif d'infusion (non représentés sur les figures). Le dispositif d'infusion est muni d'une chambre d'infusion alimentée en mouture de café par un broyeur à grains (non représentés sur les figures). La machine à café automatique 1 comporte un bâti 3, un support de récipient 4 sur lequel un récipient peut être disposé, et une tête de distribution 10 réglable en hauteur. La tête de distribution 10 comporte deux buses de distribution 11a, 11b de café alimentées en café par un conduit d'amenée de café 12 souple (Fig. 2) relié au dispositif d'infusion. Le support de récipient 4 est agencé au-dessus d'un bac récolte gouttes 5. La tête de distribution 10 est montée coulissante verticalement entre une positon haute d'attente et une position basse de distribution. Ainsi l'utilisateur peut adapter la position basse de travail à la hauteur du récipient déposé sur le repose récipient 4. La machine à café automatique 1 comporte un circuit de commande 60 (Fig. 1) pour gérer la réalisation d'une boisson à partir des instructions données par un utilisateur.

La machine à café automatique 1 comporte un dispositif de moussage 20 de lait agencé dans la tête de distribution 10. Le dispositif de moussage 20 comporte un système d'aspiration de lait et d'air à effet venturi à partir d'une alimentation en eau chaude/vapeur issue du système de chauffage (non illustré sur les figures). Le système d'aspiration à effet venturi est formé à partir d'une restriction de section d'un canal d'amenée de vapeur qui débouche dans une chambre de moussage (non illustrée sur les figures). Le passage du flux de vapeur crée une dépression au niveau de la restriction de section. Le canal d'amenée de vapeur est relié au système de chauffage par un conduit d'amenée de vapeur 21 (Fig. 2). Le dispositif de moussage 20 comporte un orifice d'entrée de lait 22 destiné à recevoir un conduit d'amenée de lait (non représenté sur les figures) et un conduit d'amenée d'air 23 (Fig. 2) qui sont connectés à une sortie de la restriction de section du canal d'amenée de vapeur. Le dispositif de moussage de lait 20 comporte deux buses de distribution 24a, 24b de boissons lactées (Fig.1) agencées à proximité des buses de distribution 11a, 11b de café.

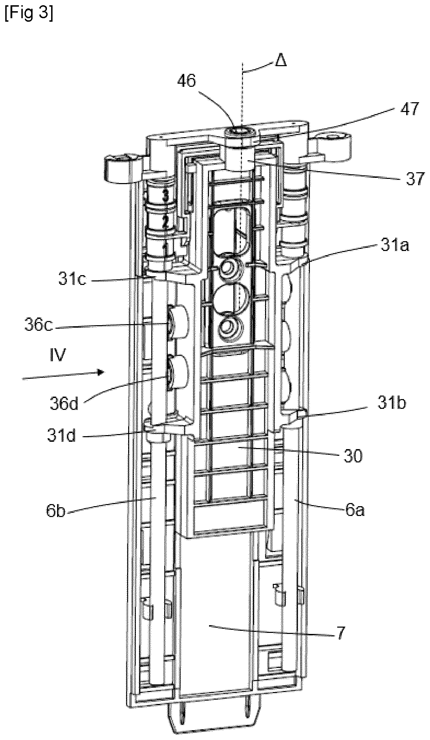

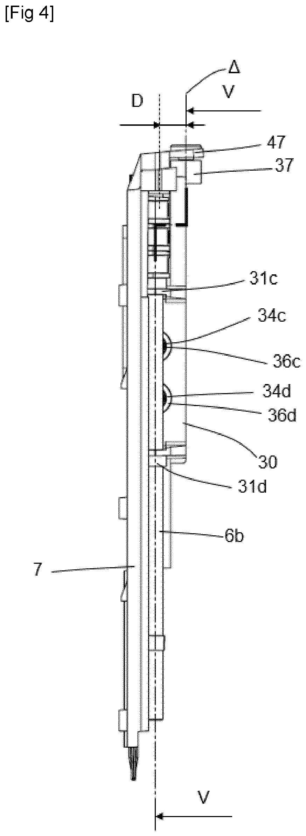

Conformément aux figures 3 à 5, la machine à café automatique 1 comporte deux colonnes de guidage 6a, 6b métalliques qui s'étendent sensiblement parallèlement l'une par rapport à l'autre. Les colonnes de guidage 6a, 6b métalliques sont fixées, par exemple par encastrement, sur le bâti 3, et plus particulièrement sur une plaque de support 7 qui est sensiblement verticale et qui appartient au bâti 3. Les colonnes de guidage 6a, 6b métalliques sont en particulier immobiles en translation par rapport au bâti 3 et s'étendent sensiblement verticalement. Chacune des colonnes de guidage 6a, 6b métalliques présente avantageusement une section circulaire. La machine à café automatique 1 comporte en outre un chariot 30 monté coulissant sur les colonnes de guidage 6a, 6b métalliques selon une direction de déplacement sensiblement verticale, et sur lequel est montée la tête de distribution 10.

Ainsi, la tête de distribution 10 est déplaçable verticalement de la position haute d'attente vers une position basse de travail adaptée à la taille du récipient (par exemple récipient de grande taille, telle qu'un mug ou récipient de petite taille, telle qu'une tasse destinée à contenir un ristretto) déposé sur le support de récipient 4 et être alimentée en boisson, par exemple en café, à partir de la tête de distribution 10 sans risque d'éclaboussure.

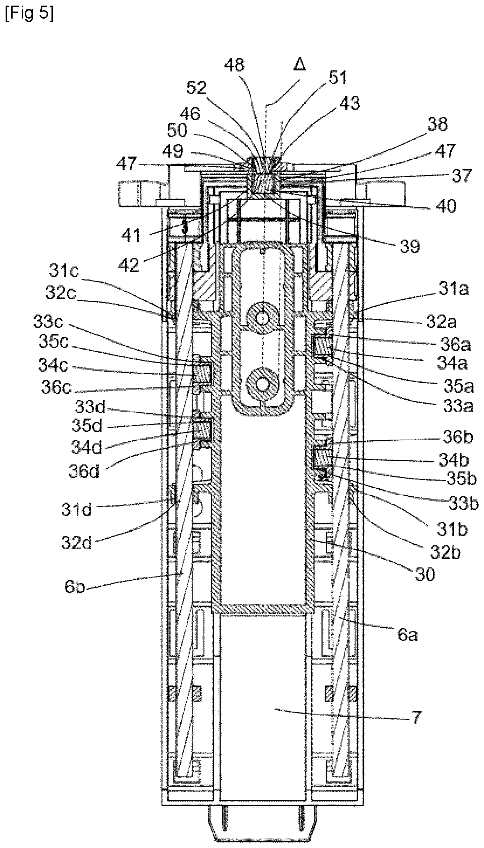

La tête de distribution 10 est montée sur le chariot 30, par exemple par montage en force et/ou par bridage à l'aide de vis de fixation. Le chariot 30 comporte quatre portions de guidage 31a, 31b, 31c, 31d : deux portions de guidage 31a, 31b disposées d'un premier côté du chariot 30 et décalées verticalement l'une par rapport à l'autre et deux portions de guidage 31c, 31d disposées d'un deuxième côté du chariot 30 et décalées verticalement l'une par rapport. Chaque portion de guidage 31a, 31b, 31c, 31d est pourvue d'un orifice de guidage 32a, 32b, 32c, 32d circulaire à travers lequel passe l'une des colonnes de guidage 6a, 6b (Fig. 5).

Le chariot 30 comporte de plus un dispositif de maintien configuré pour maintenir en position le chariot 30 et la tête de distribution 10 par rapport aux colonnes de guidage 6a, 6b métalliques. Le dispositif de maintien comporte une pluralité d'aimants 34a, 34b, 34c, 34d (Fig. 5) qui coopèrent chacun magnétiquement avec une des colonnes de guidage 6a, 6b métalliques. Le dispositif de maintien comporte respectivement sur le premier côté du chariot 30, deux aimants 34a, 34b qui coopèrent magnétiquement avec la colonne de guidage 6a métallique et sur le deuxième côté du chariot 30, deux aimants 34c, 34d qui coopèrent magnétiquement avec la colonne de guidage 6b métallique. Avantageusement, chaque aimant 34a, 34b, 34c, 34d est un aimant permanent, et présente une forme générale cylindrique.

Le dispositif de maintien comporte en outre une pluralité d'éléments de frottement et d'usure 36a, 36b, 36c, 36d (Fig. 5) agencés chacun entre un aimant 34a, 34b, 34c, 34d respectif et la colonne de guidage 6a, 6b métallique respective. Chaque élément de frottement et d'usure 36a, 36b, 36c, 36d est avantageusement réalisé en matière plastique, et peut par exemple être réalisé en polyacétal chargé en polytétrafluoroéthylène. Chaque élément de frottement et d'usure 36a, 36b, 36c, 36d est de préférence configuré pour maintenir une distance sensiblement constante entre l'aimant 34a, 34b, 34c, 34d respectif et la colonne de guidage 6a, 6b métallique respective. Chaque élément de frottement et d'usure 36a, 36b, 36c, 36d comporte un logement d'insertion 35a, 35b, 35c, 35d (Fig. 5) dans lequel est inséré l'aimant 34a, 34b, 34c, 34d respectif. Chaque logement d'insertion 35a, 35b, 35c, 35d est sensiblement cylindrique et reçoit au moins la portion d'extrémité de l'aimant 34a, 34b, 34c, 34d respectif qui est tournée vers la colonne de guidage métallique 6a, 6b respective. Avantageusement, chaque élément de frottement et d'usure 36a, 36b, 36c, 36d est logé, au moins en partie, dans un logement de réception 33a, 33b, 33c, 33d respectif ménagé sur le chariot 30 (Fig. 5).

La présence d'un tel élément de frottement et d'usure 36a, 36b, 36c, 36d permet d'une part de prévenir l'usure de l'aimant, et donc de garantir des efforts de frottement entre l'aimant 34a, 34b, 34c, 34d et la colonne de guidage 6a, 6b métallique respective sensiblement constants dans le temps, et d'autre part de garantir un jeu de fonctionnement sensiblement constant entre le chariot 30 et les colonnes de guidage 6a, 6b métalliques. Ces dispositions permettent ainsi d'assurer à l'utilisateur un confort de réglage optimal de la position de la tête de distribution 10 en fonction du type de tasse utilisée, et de garantir à la machine à café automatique 1 un aspect qualitatif lors de son utilisation.

Tel que visible aux figures 2 à 5, la machine à café automatique 1 comporte un dispositif complémentaire de maintien de la tête de distribution en position haute d'attente. Le dispositif complémentaire comporte une pièce magnétique 46 et un aimant d'immobilisation 40 agencés de manière superposée (Fig. 5). La pièce magnétique 46 est fixée sur une extension horizontale 47 de la plaque de support 7. L'aimant d'immobilisation 40 est fixé sur le chariot 30.

Tel que visible à la figure 5, l'extension horizontale 47 comporte un logement traversant 48 cylindrique muni d'un épaulement inférieur 49. Le logement traversant 48 comporte un axe vertical Δ. La pièce magnétique 46 présente une forme sensiblement cylindrique qui comporte un rétrécissement de section 50 à une extrémité inférieure 51. La pièce magnétique 46 est insérée dans le logement traversant 48, le rétrécissement de section 50 en appui contre l'épaulement inférieur 49. L'extrémité inférieure 51 de la pièce magnétique 46 comporte une face plane 52, horizontale. La pièce magnétique 46 peut être insérée de manière serrante ou collée dans le logement traversant 48.

Le chariot 30 comporte un bord supérieur 37 dans lequel est agencée une cavité 38. La cavité 38 est cylindrique et comporte un axe vertical confondu avec l'axe Δ. La cavité 38 présente un fond 39 et une ouverture supérieure 41. L'aimant d'immobilisation 40 présente une forme cylindrique et est inséré dans la cavité 38, en appui sur le fond 39. L'aimant d'immobilisation 40 peut être inséré de manière serrante ou collée dans la cavité 38. L'aimant d'immobilisation 40 comporte une extrémité supérieure 42 qui comprend une face plane 43, horizontale. Dans la position haute d'attente, la face plane 43 de l'aimant d'immobilisation 40 est en plaquée magnétiquement sur la face plane 52 de pièce magnétique 46. L'aimant d'immobilisation 40 et la pièce métallique 46 sont dimensionnés pour assurer un effort de maintien du chariot 30 et de la tête de distribution 10 en position haute d'attente égal à 10 N.

La tête de distribution 10 est mobile sur une course égale à 70 millimètres. Les conduits d'amenée de café 12 , d'amenée de vapeur 21 et d'amenée d'air 23 sont souples mais présentent tout de même une certaine rigidité, notamment le conduit d'amenée de vapeur 21 qui présente une construction renforcée par une toile textile pour supporter la chaleur et la pression. De plus, les conduits d'amenée de café 12, d'amenée de vapeur 21 et d'amenée d'air 23 sont agencés dans des espaces exigus(Fig. 2). Dans la position haute d'attente, les conduits d'amenée de café 12, d'amenée de vapeur 21 et d'amenée d'air 23, du fait de leur agencement et de leur rigidité relative, tendent à tirer le chariot 30 et la tête de distribution 10 vers le bas, notamment avec une course importante de la tête de distribution 10 de 70 millimètres. Les conduits d'amenée de café 12, d'amenée de vapeur 21 et d'amenée d'air 23 tendent à tirer le chariot 30 et la tête de distribution 10 vers le bas avec un effort qui peut provoquer un déplacement de 5 à 10 millimètres sans le dispositif de maintien complémentaire.

La projection orthogonale de l'axe vertical Δ de l'aimant d'immobilisation 40 et de la pièce magnétique 46 sur un plan vertical passant par les deux colonnes de guidage 6a, 6b métalliques est positionnée de manière centrée entre les deux colonnes de guidage 6a, 6b métalliques. La distance D entre l'axe Δ et le plan vertical passant par les deux colonnes de guidage est égal à 9 millimètres.

En fonctionnement, l'utilisateur qui a réalisé une boisson après avoir amenée la tête de distribution 10 en position basse de travail, déplace la tête de distribution 10 vers le haut pour la placer en position haute d'attente. Les aimants 34a, 34b, 34c, 34d et les élément de frottement et d'usure 36a, 36b, 36c, 36d du dispositif de maintien assurent un premier effort de maintien de la tête de distribution 10. L'aimant d'immobilisation 40 et la pièce magnétique 46 du dispositif de maintien complémentaire assurent un deuxième effort de maintien de la tête de distribution 10. L'agencement et la rigidité relative des conduits d'amenée de café 12, d'amenée de vapeur 21 et d'amenée d'air 23 tendent à tirer le chariot 30 et la tête de distribution 10 vers le bas avec un effort qui peut être supérieur au premier effort de maintien. Ainsi, le deuxième effort de maintien fourni par le dispositif de maintien complémentaire garantit le positionnement de la tête de distribution 10 en position haute d'attente.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, tel que défini par les revendications.

Ainsi, dans une première variante de réalisation non illustrée, l'aimant d'immobilisation est un électroaimant

Ainsi, dans une deuxième variante de réalisation non illustrée, le dispositif de maintien comporte un élément de frottement et d'usure agencé sur le chariot et venant au contact de l'au moins une colonne de guidage sous l'action d'un organe de mise en pression qui comporte un ressort.

## Revendications

1. Machine de distribution de boissons (1) comportant un bâti (3), au moins une colonne de guidage (6a, 6b) agencée sur le bâti (3), un chariot (30) monté coulissant sur l'au moins une colonne de guidage (6a, 6b) et une tête de distribution (10) qui est montée sur le chariot (30) pour être réglable en hauteur, le chariot (30) comportant un dispositif de maintien configuré pour maintenir en position le chariot (30) et la tête de distribution (10) entre une position haute d'attente et une position basse de distribution, **caractérisée en ce qu'**elle comporte un dispositif complémentaire de maintien de la tête de distribution (10) en position haute d'attente, le dispositif complémentaire comportant une pièce magnétique (46) et un aimant d'immobilisation (40) agencés de manière superposée, la pièce magnétique (46) étant fixée sur le chariot (30) et l'aimant d'immobilisation (40) étant fixé sur le bâti (3) ou réciproquement.

2. Machine de distribution de boissons (1) selon la revendication 1, **caractérisée en ce que** l'aimant d'immobilisation (40) et la pièce métallique (46) sont dimensionnés pour assurer un effort de maintien de la tête de distribution (10) en position haute supérieur à 5 N.

3. Machine de distribution de boissons (1) selon l'une quelconque des revendications 1 à 2, **caractérisée en ce que** la tête de distribution (10) est mobile sur une course supérieure à 50 millimètres.

4. Machine de distribution de boissons (1) selon l'une quelconque des revendications 1 à 3, **caractérisée en ce que** le chariot (30) comporte un bord supérieur (37), l'aimant d'immobilisation (40) ou la pièce magnétique (46) étant agencé sur le bord supérieur (37).

5. Machine de distribution de boissons (1) selon l'une quelconque des revendications 1 à 4, **caractérisée en ce que** le chariot (30) est monté coulissant sur deux colonnes de guidage (6a, 6b), l'aimant d'immobilisation (40) ou la pièce magnétique (46) étant agencé entre les deux colonnes de guidage (6a, 6b).

6. Machine de distribution de boissons (1) selon l'une quelconque des revendications 1 à 5, **caractérisée en ce que** la tête de distribution (10) comporte au moins une buse de distribution (11a, 11b, 24a, 24b) de boissons reliée à la machine de distribution de boissons par un conduit (12, 21, 23) souple.

7. Machine de distribution de boissons (1) selon la revendication 6, **caractérisée en ce qu'**elle est une machine à café automatique, la tête de distribution (10) comportant au moins une buse de distribution (11a, 11b) de café et au moins une buse de distribution (24a, 24b) de boissons lactées.

8. Machine de distribution de boissons (1) selon les revendications 1 et 7, **caractérisée en ce que** le dispositif de maintien comporte au moins un élément de frottement et d'usure (36a, 36b, 36c, 36d) agencé sur le chariot (30) et venant au contact de l'au moins une colonne de guidage (6a, 6b) sous l'action d'un organe de mise en pression (34a, 34b, 34c, 34d).

9. Machine de distribution de boissons (1) selon la revendication 8, **caractérisée en ce que** l'au moins une colonne de guidage (6a, 6b) est métallique et **en ce que** l'organe de mise en pression comporte au moins un aimant (34a, 34b, 34c, 34d) qui coopère magnétiquement avec l'au moins une colonne de guidage (6a, 6b).

10. Machine de distribution de boissons (1) selon la revendication 9, **caractérisée en ce que** l'organe de mise en pression comporte au moins un ressort.

## Patentansprüche

1. Getränkeausgabemaschine (1), umfassend ein Gestell (3), mindestens eine Führungssäule (6a, 6b), die an dem Gestell (3) angeordnet ist, einen Schlitten (30), der auf der mindestens einen Führungssäule (6a, 6b) gleitend angebracht ist, und einen Ausgabekopf (10), der an dem Schlitten (30) angebracht ist, um in der Höhe einstellbar zu sein, wobei der Schlitten (30) eine Haltevorrichtung umfasst, die konfiguriert ist, um den Schlitten (30) und den Ausgabekopf (10) zwischen einer oberen Warteposition und einer unteren Ausgabeposition in Position zu halten, **dadurch gekennzeichnet, dass** sie eine ergänzende Vorrichtung zum Halten des Ausgabekopfes (10) in oberer Warteposition umfasst, wobei die ergänzende Vorrichtung ein magnetisches Teil (46) und einen Immobilisierungsmagneten (40) umfasst, die überlagert angeordnet sind, wobei das magnetische Teil (46) am Schlitten (30) befestigt ist, und der Immobilisierungsmagnet (40) am Gestell (3) befestigt ist oder umgekehrt.

2. Getränkeausgabemaschine (1) nach Anspruch 1, **dadurch gekennzeichnet, dass** der Immobilisierungsmagnet (40) und das metallische Teil (46) bemessen sind, um eine Haltekraft des Ausgabekopfes (10) in oberer Position von mehr als 5 N zu gewährleisten.

3. Getränkeausgabemaschine (1) nach einem der Ansprüche 1 bis 2, **dadurch gekennzeichnet, dass** der Ausgabekopf (10) über einen Weg von mehr als 50 Millimetern beweglich ist.

4. Getränkeausgabemaschine (1) nach einem der Ansprüche 1 bis 3, **dadurch gekennzeichnet, dass** der Schlitten (30) einen oberen Rand (37) umfasst, wobei der Immobilisierungsmagnet (40) oder das magnetische Teil (46) am oberen Rand (37) angeordnet sind.

5. Getränkeausgabemaschine (1) nach einem der Ansprüche 1 bis 4, **dadurch gekennzeichnet, dass** der Schlitten (30) auf zwei Führungssäulen (6a, 6b) gleitend angebracht ist, wobei der Immobilisierungsmagnet (40) oder das magnetische Teil (46) zwischen den beiden Führungssäulen (6a, 6b) angeordnet sind.

6. Getränkeausgabemaschine (1) nach einem der Ansprüche 1 bis 5, **dadurch gekennzeichnet, dass** der Ausgabekopf (10) mindestens eine Ausgabedüse (11a, 11b, 24a, 24b) für Getränke umfasst, die durch eine flexible Leitung (12, 21, 23) an die Getränkeausgabemaschine angeschlossen ist.

7. Getränkeausgabemaschine (1) nach Anspruch 6, **dadurch gekennzeichnet, dass** sie eine automatische Kaffeemaschine ist, wobei der Ausgabekopf (10) mindestens eine Ausgabedüse (11a, 11b) für Kaffee, und mindestens eine Ausgabedüse (24a, 24b) für Milchgetränke umfasst.

8. Getränkeausgabemaschine (1) nach den Ansprüchen 1 und 7, **dadurch gekennzeichnet, dass** die Haltevorrichtung mindestens ein Reibe- und Verschleißelement (36a, 36b, 36c, 36d) umfasst, das am Schlitten (30) angeordnet ist, und durch die Wirkung eines Druckbeaufschlagungsorgans (34a, 34b, 34c, 34d) mit der mindestens einen Führungssäule (6a, 6b) in Kontakt kommt.

9. Getränkeausgabemaschine (1) nach Anspruch 8, **dadurch gekennzeichnet, dass** die mindestens eine Führungssäule (6a, 6b) metallisch ist, und dadurch, dass das Druckbeaufschlagungsorgan mindestens einen Magneten (34a, 34b, 34c, 34d) umfasst, der magnetisch mit der mindestens einen Führungssäule (6a, 6b) zusammenwirkt.

10. Getränkeausgabemaschine (1) nach Anspruch 9, **dadurch gekennzeichnet, dass** das Druckbeaufschlagungsorgan mindestens eine Feder umfasst.

## Claims

1. Beverage dispensing machine (1) comprising a frame (3), at least one guide column (6a, 6b) arranged on the frame (3), a carriage (30) slidably mounted on the at least one guide column (6a, 6b) and a dispensing head (10) which is mounted on the carriage (30) so as to be adjustable in height, the carriage (30) comprising a holding device configured to hold the carriage (30) and the dispensing head (10) in position between a high waiting position and a low dispensing position, said machine being **characterised in that** it comprises a complementary device for holding the dispensing head (10) in the upper waiting position, the complementary device comprising a magnetic part (46) and an immobilisation magnet (40) arranged in a stacked manner, the magnetic part (46) being fastened to the carriage (30) and the immobilisation magnet (40) being fastened to the frame (3) or vice versa.

2. Beverage dispensing machine (1) according to claim 1, **characterised in that** the immobilisation magnet (40) and the metal part (46) are dimensioned to provide a force of greater than 5 N for holding the dispensing head (10) in the upper position.

3. Beverage dispensing machine (1) according to any one of claims 1 to 2, **characterised in that** the dispensing head (10) is movable over a stroke of more than 50 millimetres.

4. Beverage dispensing machine (1) according to any one of claims 1 to 3, **characterised in that** the carriage (30) comprises an upper edge (37), the immobilisation magnet (40) or the magnetic part (46) being arranged on the upper edge (37).

5. Beverage dispensing machine (1) according to any one of claims 1 to 4, **characterised in that** the carriage (30) is slidably mounted on two guide columns (6a, 6b), the immobilisation magnet (40) or the magnetic part (46) being arranged between the two guide columns (6a, 6b).

6. Beverage dispensing machine (1) according to any one of claims 1 to 5, **characterised in that** the dispensing head (10) comprises at least one beverage dispensing nozzle (11a, 11b, 24a, 24b) connected to the beverage dispensing machine by a flexible conduit (12, 21, 23).

7. Beverage dispensing machine (1) according to claim 6, **characterised in that** it is an automatic coffee machine, the dispensing head (10) comprising at least one nozzle (11a, 11b) for dispensing coffee and at least one nozzle (24a, 24b) for dispensing milk-based beverages.

8. Beverage dispensing machine (1) according to claims 1 and 7, **characterised in that** the holding device comprises at least one friction and wear element (36a, 36b, 36c, 36d) which is arranged on the carriage (30) and comes into contact with the at least one guide column (6a, 6b) when acted upon by a pressurising member (34a, 34b, 34c, 34d).

9. Beverage dispensing machine (1) according to claim 8, **characterised in that** the at least one guide column (6a, 6b) is metallic and **in that** the pressurising member comprises at least one magnet (34a, 34b, 34c, 34d) which cooperates magnetically with the at least one guide column (6a, 6b).

10. Beverage dispensing machine (1) according to claim 9, **characterised in that** the pressurising member comprises at least one spring.
